# DEMANDE DE BREVET EUROPEEN

(11) **EP 1 528 254 A1**
(43) Date de publication de la demande: **04.05.2005**
(21) Numéro de dépôt: 03447268.8
(22) Date de dépôt: 29.10.2003
(51) Int. Cl.: F03B 17/02

(54) **Dispositif pour la mise en rotation d'un corps circulaire sur lui-même**

(71) Demandeur: Simon, Pierre, 7520 Ramegnies-Chin (BE)
(72) Inventeur: Simon, Pierre, 7520 Ramegnies-Chin (BE)
(74) Mandataire: Cauchie, Daniel

(57) **Abrégé**

La présente invention concerne un dispositif pour communiquer un mouvement de rotation sur lui-même autour d'un axe de symétrie et dans un fluide liquide à chaque corps cylindrique d'un ensemble comprenant deux corps cylindriques (6/7) séparés et solidarisés.

L'invention est caractérisée en ce que le dispositif comprend un boîtier scindé intérieurement par une paroi transversale constituée d'un diaphragme (4) élastiquement déformable ou d'une paroi rigide dont une portion est remplacée par un diaphragme élastiquement déformable, formant ainsi une chambre de détente (2) apte à recevoir le fluide liquide et une chambre de pression (3) apte à recevoir un fluide gazeux et en ce que la chambre de détente comprend ledit ensemble de corps cylindriques solidarisés par un moyen de liaison (9), coopérant avec eux, muni d'au moins un moyen saillant (10) apte à recevoir une poussée ascensionnelle du fluide gazeux dans le fluide liquide.

## Description

La présente invention se rapporte à un dispositif pour communiquer un mouvement de rotation sur lui-même, autour d'un axe de symétrie et dans un fluide liquide, à au moins un corps circulaire ou à chaque corps circulaire d'un ensemble comprenant au moins deux corps circulaires solidarisés.

Dans la plupart des dispositifs connus à ce jour pour la production d'un déplacement entre deux points séparés par exemple un déplacement en translation ou en rotation, la force nécessaire à cet effet est engendrée au départ d'une source énergétique à la fois coûteuse et polluante par exemple une source d'énergie fossilisée.

Aussi, la mise au point de dispositifs faisant appel à des énergies de remplacement non polluantes et peu coûteuses, comme l'énergie éolienne, solaire ou hydraulique, est-elle devenue un défi important de cette époque et l'objet d'une recherche de plus en plus intense à cet effet.

La présente invention a pour but de proposer un dispositif, du type indiqué précédemment, qui pallie les inconvénients cités ci-dessus présentés par l'état de la technique et permet l'utilisation de différentes formes d'énergie non polluantes.

Pour atteindre ce but, le dispositif pour la mise en oeuvre de la méthode décrite ci-dessus c'est-à-dire pour communiquer un mouvement de rotation sur lui-même, autour d'un axe de symétrie et dans un fluide liquide, à au moins un corps ou à chaque corps circulaire d'un ensemble comprenant au moins deux corps circulaires solidarisés, est caractérisé en ce qu'il comprend un boîtier scindé intérieurement et transversalement en une chambre de détente apte à recevoir le fluide liquide, de préférence l'eau ou l'eau salée et en une chambre de pression apte à recevoir un fluide gazeux, de préférence l'air et en ce que la chambre de détente comprend ledit corps circulaire ou ledit ensemble de corps circulaires, muni d'au moins un moyen saillant apte à recevoir une poussée ascensionnelle du fluide gazeux dans le fluide liquide.

Dans la suite de la description de même que les revendications, on désignera par « ensemble de corps circulaires », un ensemble comprenant au moins deux corps circulaires séparés et solidarisés par un moyen quelconque de liaison coopérant avec eux.

Le boîtier utilisé dans le dispositif selon l'invention est de forme quelconque, plus généralement de forme parallélépipédique mais de préférence de forme cylindrique.

Habituellement, ce boîtier est élaboré en une matière inoxydable telle que l'acier inoxydable ou en une matière thermoplastique par exemple un polyéthylène, un polystyrène, un polyméthylméthacrylate ou similaires.

D'autre part, le corps circulaire se présente généralement sous la forme d'un corps cylindrique muni éventuellement d'une rainure radiale pour logement d'un moyen de liaison lui procurant par exemple la configuration d'une roue à gorge. Ce corps circulaire est monté sur un axe longitudinal de symétrie dont une des extrémités traverse extérieurement le boîtier.

Le moyen saillant apte à recevoir une poussée ascensionnelle prend habituellement la forme d'un système capable d'emprisonner le fluide gazeux lors d'un mouvement ascendant de ce système dans le fluide liquide puis de libérer ce fluide gazeux lors d'un mouvement descendant.

A titre d'exemples, un tel système peut être représenté par une pale ou ailette éventuellement munie d'un bord transversal replié ou encore d'un godet, d'une poche ou analogues comportant une ouverture pour réception et relâchement du fluide gazeux. Habituellement, le repli du bord et l'ouverture ci-dessus sont dirigés dans le sens opposé au sens de rotation du corps circulaire.

Ce système est fixé extérieurement au corps circulaire et éventuellement par l'intermédiaire d'une articulation. Dans le cas d'un tel système articulé, et en vue d'en favoriser son écartement du corps circulaire lors d'un mouvement ascendant, il peut être avantageux de lester le bord de ce système avec un moyen de densité inférieure à celle du fluide liquide par exemple avec une matière naturelle telle que le liège ou une matière synthétique du genre polystyrène expansé ou avec un récipient contenant un gaz de préférence de l'air.

Lorsque le système est élaboré en un matériau métallique approprié, il est possible également d'accentuer l'écartement en question par l'intermédiaire d'un ou de plusieurs aimants disposés à proximité du passage de ce système lors d'un mouvement ascendant.

Les pales ou ailettes évoquées précédemment sont formées habituellement d'une plaque rigide généralement métallique, de préférence en un matériau inoxydable par exemple l'acier inoxydable ou une matière thermoplastique telle qu'un polystyrène, un polyéthylène ou un polyméthylméthacrylate ou similaires.

Le godet peut être lui aussi élaboré en un matériau métallique ou thermoplastique tel que ci-dessus tandis que la poche est habituellement formée à partir d'une feuille de matière souple et résistante genre toile en fibre naturelle et/ou artificielle tel que le coton ou le nylon.

Avantageusement, cette poche peut être munie d'un moyen de rigidification courant le long de son bord d'ouverture par exemple un fil en métal ou en matière plastique rigide de manière à maintenir cette ouverture constamment béante.

Selon un premier mode de réalisation, le dispositif selon l'invention est caractérisé en ce qu'il comprend un boîtier scindé intérieurement par une paroi transversale constituée, d'un diaphragme élastiquement déformable ou d'une paroi rigide dont une portion est remplacée par un diaphragme élastiquement déformable.

Dans un tel mode de réalisation, le boîtier est scindé transversalement par un diaphragme habituellement formé d'une matière souple élastiquement déformable tel qu'un élastomère ou un caoutchouc naturel ou artificiel. Ce diaphragme assure notamment une étanchéité entre les deux chambres ainsi formées de manière à empêcher le passage non désiré des fluides d'une chambre à l'autre.

D'une autre manière, le boîtier peut être scindé par une paroi transversale rigide dont une portion est remplacée par un diaphragme élastiquement déformable du type décrit précédemment, une étanchéité étant maintenue entre les deux chambres ainsi constituées.

Selon une autre caractéristique de l'invention, la chambre de pression est pourvue d'un moyen de pression sur le diaphragme. Ce moyen de pression prend habituellement la forme d'un piston par exemple le piston d'un vérin agissant sur une portion centrée du diaphragme. D'autre part, ce moyen de pression est relié à une source extérieure de pression apte à lui communiquer un déplacement axial, alternatif et vertical du genre va et vient. Cette source de pression est généralement produite par une pompe actionnée au départ d'une source d'énergie de préférence non polluante tel qu'une source d'énergie hydraulique, éolienne ou solaire. A titre d'exemple, la source d'énergie non polluante peut être un courant ou une chute d'eau, une éolienne ou une batterie solaire.

De manière à diriger la circulation des fluides utilisés dans ce mode de réalisation de la présente invention, la paroi transversale est pourvue d'un moyen d'ouverture et de fermeture anti-retour généralement une valve ou un clapet anti-retour disposé au niveau du diaphragme ou de la portion de paroi transversale rigide. Ce moyen anti-retour permet uniquement un passage du fluide gazeux de la chambre de pression vers la chambre de détente tandis que cette chambre de pression est elle-même munie, sur l'une de ses parois, d'un moyen anti-retour, tel que ci-dessus, assurant uniquement l'entrée d'un fluide gazeux extérieur au boîtier.

Dans un deuxième mode de réalisation, le dispositif selon l'invention est caractérisé en ce qu'il comprend un boîtier scindé intérieurement par une paroi transversale rigide.

Dans cet autre mode de réalisation, le boîtier est scindé intérieurement par une paroi transversale en un matériau rigide par exemple analogue à celui utilisé pour le boîtier. Cette paroi maintient une étanchéité entre les deux chambres ainsi créées de manière à empêcher le passage non désiré des fluides d'une chambre à l'autre.

Selon une autre caractéristique de l'invention, la chambre de pression est munie d'un moyen de pression sur la totalité de la paroi transversale rigide. Ce moyen de pression prend habituellement la forme d'un piston par exemple le piston d'un vérin agissant sur cette paroi transversale et dont la tête épouse de façon étanche le contour intérieur du boîtier. Ce moyen de pression est relié à une source extérieure de pression apte à lui communiquer, comme dans le mode de réalisation précédent, un mouvement axial, alternatif et vertical, cette source de pression étant identique ou analogue à celles qui ont été évoquées dans ce mode de réalisation précédemment décrit.

D'autre part, la chambre de pression et la chambre de détente communiquent entre elles par un conduit pouvant être configuré de différentes manières.

A titre d'exemple, il peut s'agir d'un conduit situé en totalité dans la chambre de détente et dont une extrémité, ouverte dans la chambre de pression, est située dans la paroi transversale rigide dont elle affleure de préférence la surface, l'autre extrémité étant située dans cette chambre de détente à un niveau inférieur à celui du corps circulaire le plus proche de la base de cette chambre de détente.

D'une autre manière, ce conduit qui s'étend à l'extérieur du boîtier présente une extrémité, ouverte dans la chambre de pression, située dans la paroi latérale de celle-ci et, de préférence, affleurant la paroi transversale rigide, l'autre extrémité étant ouverte dans la chambre de détente et située dans la base de celle-ci ou à l'intérieur de cette chambre de détente à un niveau inférieur à celui du corps circulaire le plus proche de la base de celle-ci.

De manière à diriger la circulation des fluides utilisés dans ce mode de réalisation de la présente invention, la paroi transversale rigide est munie d'un moyen anti-retour généralement une valve ou un clapet anti-retour permettant uniquement un passage du fluide gazeux de la chambre de détente vers la chambre de pression tandis que l'extrémité du conduit ouvert à l'intérieur de la chambre de détente est surmontée également d'un moyen anti-retour tel que ci-dessus, autorisant uniquement l'entrée d'un fluide gazeux dans la chambre inférieure.

Selon des mises en oeuvre préférées du dispositif selon l'invention, l'ensemble de corps circulaires comprend deux corps cylindriques séparés et solidarisés par un moyen de liaison coopérant avec ces deux corps cylindriques.

En conséquence, selon un premier aspect particulier de l'invention, le dispositif pour communiquer un mouvement de rotation sur lui-même autour d'un axe de symétrie et dans un fluide liquide à chaque corps cylindrique d'un ensemble comprenant deux corps cylindriques séparés et solidarisés est caractérisé en ce qu'il comprend un boîtier scindé intérieurement par une paroi transversale constituée d'un diaphragme élastiquement déformable ou d'une paroi rigide dont une portion est remplacée par un diaphragme élastiquement déformable, formant ainsi une chambre de détente apte à recevoir le fluide liquide et une chambre de pression apte à recevoir un fluide gazeux et en ce que la chambre de détente comprend ledit ensemble de corps cylindriques solidarisés par un moyen de liaison, coopérant avec eux, muni d'au moins un moyen saillant apte à recevoir une poussée ascensionnelle d'un fluide gazeux dans le fluide liquide.

En outre, selon un second aspect particulier de l'invention, le dispositif pour communiquer un mouvement de rotation sur lui-même autour d'un axe de symétrie et dans un fluide liquide à chaque corps cylindrique d'un ensemble comprenant deux corps cylindriques séparés et solidarisés est caractérisé en ce qu'il comprend un boîtier scindé intérieurement par une paroi transversale rigide en une chambre de détente apte à recevoir le fluide liquide et en une chambre de pression apte à recevoir un fluide gazeux et en ce que la chambre de détente comprend ledit ensemble de corps cylindriques solidarisés par un moyen de liaison, coopérant avec eux, muni d'au moins un moyen saillant apte à recevoir une poussée ascensionnelle du fluide gazeux dans le fluide liquide.

Habituellement, l'ensemble des deux corps cylindriques ci-dessus correspond à un ensemble de deux tels corps cylindriques séparés et solidarisés par un moyen de liaison coopérant avec ces deux corps cylindriques en ce qu'il est tendu radialement sur chacun d'eux.

D'autre part, ce moyen de liaison est également muni d'au moins un moyen saillant apte à recevoir une poussée ascensionnelle de fluide gazeux, ce moyen saillant pouvant prendre la forme d'un système capable d'emprisonner et de libérer un fluide gazeux tel que décrit précédemment.

Ainsi, le moyen de liaison peut être configuré, par exemple, en une courroie, une sangle, une chaînette ou analogues, supportant une pluralité de tels systèmes tels que godets, poches ou encore pales ou ailettes, avec bord transversal replié ou non. Ces pales ou ailettes s'étendent à partir de ce moyen de liaison en formant un angle aigu avec celui-ci, habituellement compris entre 30 et 80°, de préférence compris entre 45 et 80°, dans le sens opposé au sens du mouvement du moyen de liaison.

Ces systèmes peuvent être articulés, dans ce cas au moyen de liaison, et l'écartement avec celui-ci peut être accentué au moyen de lests ou d'aimants comme précédemment.

Au surplus, il est possible de combiner, pour un même dispositif, des systèmes différents par exemple une pluralité de pales groupées et une pluralité de poches groupées ou encore une pluralité de pales et de poches les unes et les autres en alternance.

L'invention sera mieux comprise et d'autres buts, caractéristiques et avantages de celle-ci apparaîtront plus clairement à la lumière de la description explicative ci-après faite en référence aux dessins schématiques annexés donnés uniquement à titre d'exemples illustrant des modes de réalisation de l'invention et dans lesquels :
- la figure 1 est une vue en coupe frontale d'un premier mode de réalisation d'un dispositif au repos, selon l'invention,
- la figure 2 est une vue en coupe frontale du dispositif à la figure 1 dont le moyen de pression se déplace dans sa phase ascendante,
- la figure 3 est une vue en coupe frontale du dispositif à la figure 1 dont le moyen de pression se déplace dans sa phase descendante,
- la figure 4 est une vue en coupe transversale du dispositif à la figure 1,
- la figure 5 est une vue en coupe frontale d'un second mode de réalisation d'un dispositif au repos, selon l'invention,
- la figure 6 est une vue en coupe frontale d'une variante du mode de réalisation du dispositif aux figures 1 et 3,
- la figure 7 est une vue en coupe frontale d'une variante du mode de réalisation du dispositif à la figure 5.

### EXEMPLE 1

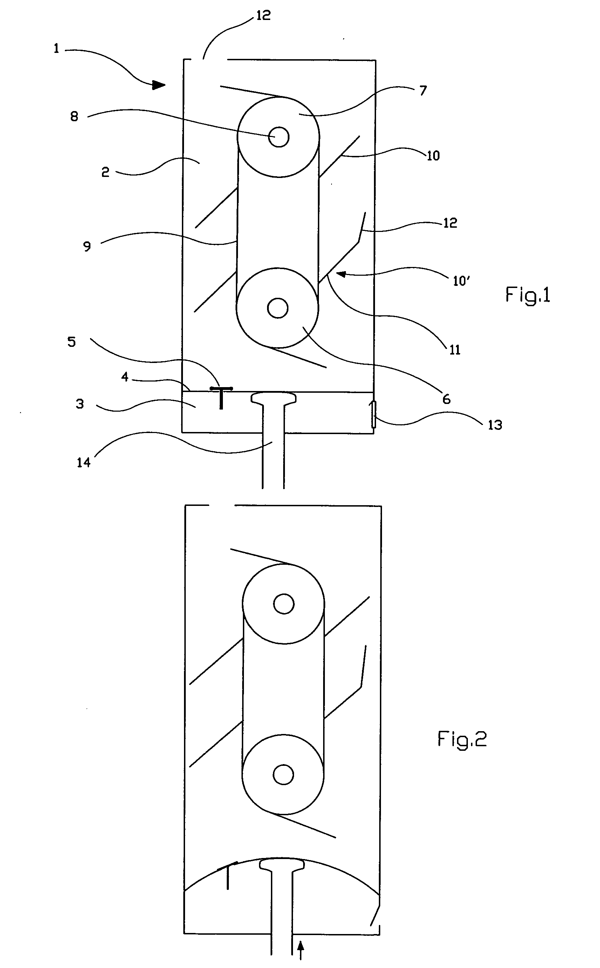

Tel que représenté aux figures 1 à 4, le dispositif selon l'invention comprend un boîtier 1 cylindrique avantageusement en une matière inoxydable telle que l'acier inoxydable ou une matière thermoplastique par exemple un polyéthylène, un polystyrène ou un polyméthylméthacrylate.

Ce boîtier est divisé en deux chambres, à savoir une chambre de détente 2 et une chambre de pression 3, au moyen d'un diaphragme 4. Ce diaphragme, qui assure une étanchéité entre ces deux chambres, est élastiquement déformable entre une première position de repos inférieure où il se trouve libre de déformation et une seconde position de repos supérieure où il se trouve dans un état de déformation maximal.

D'autre part, ce diaphragme 4, habituellement formé d'une matière souple tel qu'un élastomère ou le caoutchouc naturel ou artificiel, est également muni d'une valve ou clapet 5 anti-retour permettant le passage d'un fluide gazeux de la chambre 3 vers la chambre 2.

Comme le montre également la figure 1, la chambre 2 comprend un ensemble formé de deux corps cylindriques 6 et 7 chacun monté sur un axe 8 transversal et central, une extrémité d'un ou de ces deux axes traversant la paroi du boîtier 1, par exemple une extrémité de l'axe 8 supportant le corps cylindrique 7.

D'autre part, ces deux axes sont parallèles et situés dans un même plan vertical tandis que les deux corps cylindriques sont capables de rotation sur eux-mêmes autour de leur axe respectif.

On remarque également, à la figure 1, une courroie 9 ou sangle tendue sur ces deux corps cylindriques de manière à les solidariser et à pouvoir communiquer à l'un deux un mouvement de rotation identique engendré au niveau de l'autre. Cette courroie 9, en outre, est munie d'une pluralité de pales 10 s'étendant normalement mais plus généralement formant un angle aigu avec celle-ci. Cet angle aigu dirigé vers le clapet 5 lors d'un mouvement ascendant des pales 10 est habituellement compris entre 30 et 80° de préférence entre 45 et 80°. D'autre part, l'ensemble est disposé dans la chambre 2 de telle façon que lors d'un mouvement ascendant de la courroie 9, chacune des pales 10 soient coupées par un plan vertical passant par le clapet 5.

Ces pales 10 sont formées d'une plaque rigide généralement en un matériau inoxydable par exemple en acier inoxydable ou en une matière thermoplastique telle qu'un polystyrène, un polyéthylène ou un polyméthylméthacrylate.

Selon un autre mode de réalisation, visible à titre d'exemple à la figure 1, la pale 10 peut prendre la configuration alternative 10', cette pale 10' consistant en une plaque rigide tel que précédemment qui s'écarte de la courroie en une première portion 11 puis s'infléchit en une seconde portion 12 formant bord de sorte que l'angle intérieur entre les deux portions est généralement compris entre 90 et 180°.

En se référant à nouveau à la figure 1, on observe que la paroi supérieure du boîtier 1, qui pourrait être omise, est pourvue d'un orifice 12 destiné à permettre un échappement d'air tandis que la chambre 3 est munie, sur l'une de ses parois latérales, d'une vanne ou clapet 13 anti-retour autorisant l'entrée d'un fluide gazeux extérieur à l'intérieur de cette chambre. Par ailleurs, la chambre 3 comporte, disposé à l'intérieur, un moyen de pression tel qu'un piston 14 juxtaposé au diaphragme et actionné par une force provenant d'une source énergétique extérieure non représentée. Cette force imprime à ce piston un mouvement axial et longitudinal de va et vient, ascendant et descendant, entre deux positions extrêmes de repos, l'une inférieure l'autre supérieure.

D'autre part, la chambre 2 est remplie au moins partiellement d'un fluide liquide habituellement l'eau en sorte que lors d'un mouvement ascendant de la courroie 9 au moins une pale soit complètement située dans l'eau durant au moins une portion du trajet vertical. En outre, si l'axe 8 du corps cylindrique 7 est amené à devoir traverser le boîtier 7 pour communiquer un mouvement de rotation à l'extérieur de celui-ci, le niveau de l'eau, à l'intérieur du boîtier, sera préférentiellement maintenu sous cet axe 8 de manière à éviter d'éventuels problèmes d'étanchéité. De préférence, le niveau de l'eau, dans cette chambre 2, est légèrement supérieur à la limite supérieure du cylindre 7.

Quant à la chambre 3, celle-ci contient un fluide gazeux de préférence l'air.

A la lecture de ce qui précède, l'on se rend compte que, lors d'un mouvement ascendant, tel que représenté à la figure 2, exercé à partir de sa position de repos inférieure, illustrée à la figure 1 et en direction de la chambre 2, le piston 14 exerce une pression continue sur le diaphragme 4 qui se déforme élastiquement de manière continue. L'appel d'air consécutif, apparaissant dans la chambre 3, libère le clapet 13 qui s'ouvre en sorte que cette chambre se comble d'air à mesure de la déformation du diaphragme 4, tandis que le clapet 5 demeure en position d'obturation.

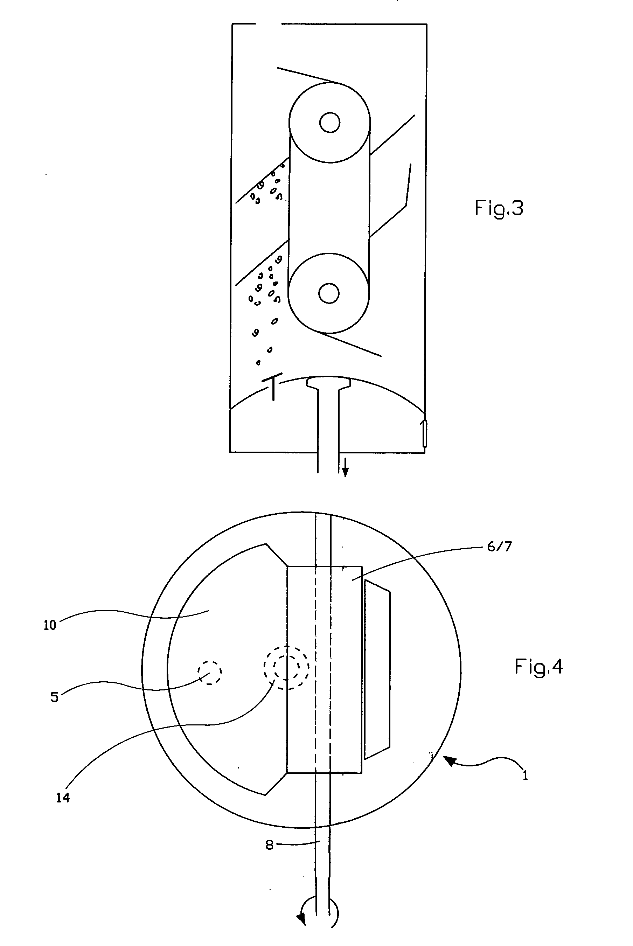

Lorsque le piston 14 occupe sa position de repos supérieure, le volume de la chambre 3 est maximal, complètement rempli d'air, tandis que les clapets 5 et 13 se trouvent en position fermée. Dès cet instant et sous l'effet d'une inversion du sens de la force extérieure exercée sur lui, le piston 14 se libère de sa position de fin de course et entame un mouvement inverse, descendant, représenté à la figure 3, amenant par la même occasion le diaphragme 4 à commencer à se rétracter tout en demeurant constamment solidaire de ce piston. En conséquence, une surpression se crée dans la chambre 3 qui provoque d'une part l'ouverture du clapet 5 lorsque la pression interne exercée sur ce clapet est supérieure à la pression de l'eau exercée sur ce même clapet et d'autre part la fermeture du clapet 13 empêchant toute entrée d'air extérieur dans la chambre 3.

Sous l'effet de la poussée ascensionnelle provoquée par l'eau et par la pression exercée sur l'air par le piston, cet air s'échappe de la chambre 3 et vient se loger dans l'angle formé par la courroie 9 et la pale 10 communiquant au moins partiellement à cette pale la poussée reçue. En conséquence, la pale entame un mouvement vertical entraînant les corps cylindriques 6 et 7 qui se mettent en rotation et communiquent ce mouvement de rotation à l'extrémité de l'axe 8 à l'extérieur du boîtier 1. L'air libéré de sa position sous la pale 10 s'échappe alors vers l'extérieur du boîtier par l'orifice 12.

Lorsque le piston 14 occupe sa position de repos inférieure, le volume de la chambre 3 est minimal et les clapets 5 et 13 sont fermés. Une nouvelle sollicitation du piston 14 sous l'effet d'un apport de force extérieur en sens inverse permet d'entamer un nouveau cycle.

### EXEMPLE 2

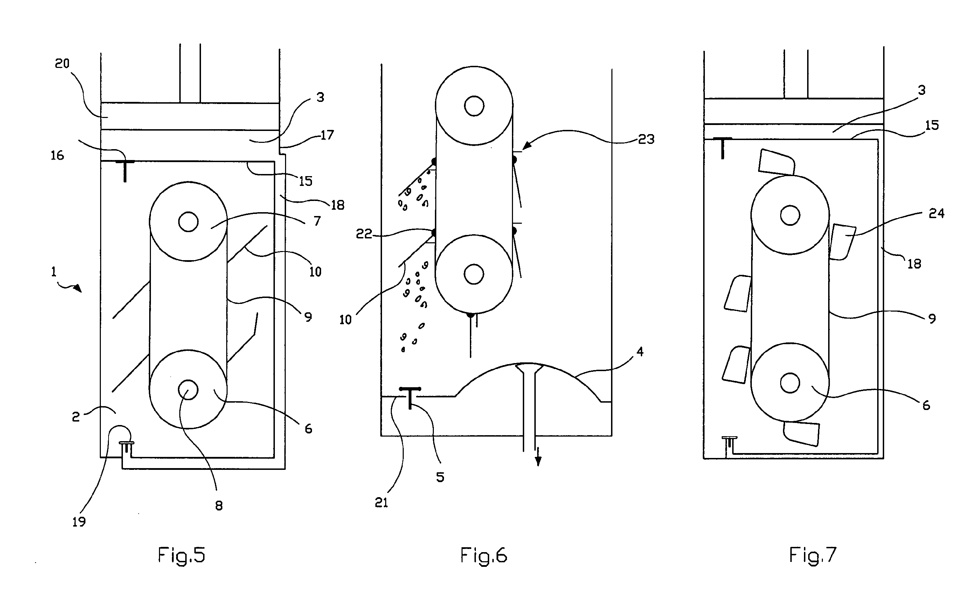

Dans un autre mode de réalisation, représenté à la figure 5, le dispositif comprend le boîtier 1 cylindrique divisé en deux chambres, à savoir une chambre de détente 2 et une chambre de pression 3, au moyen d'une paroi 15 transversale et rigide élaborée habituellement en un matériau tel que l'acier inoxydable. Cette paroi 15 est également munie d'une valve ou clapet 16 anti-retour autorisant le passage d'un fluide gazeux de la chambre 2 vers la chambre 3.

On remarque également à la figure 5, les deux corps cylindriques 6 et 7, les axes 8, la courroie 9 et les pales 10 décrits à l'Exemple 1. En se référant à nouveau à la figure 5, on observe que la paroi transversale 15 et la paroi latérale 17 de la chambre 3 se prolongent en un conduit 18 faisant corps avec le boîtier 1. Ce conduit 18, ouvert dans la chambre 3, comporte une extrémité, située dans la chambre 2 à un niveau inférieur à celui du corps cylindrique 6, surmontée d'une valve ou clapet 19 anti-retour autorisant le passage d'un fluide gazeux à l'intérieur de cette chambre 2. Par ailleurs, la chambre 3 est délimitée à sa partie supérieure par la face de travail d'une tête de piston 20 épousant de manière étanche le contour circulaire du boîtier 1.

Comme dans l'Exemple 1, le piston 20 est actionné au moins partiellement par une force extérieure imprimant, à ce piston, un mouvement axial et longitudinal de va et vient, ascendant et descendant, entre deux positions extrêmes de repos, l'une inférieure, l'autre supérieure.

La chambre 2 est remplie au moins partiellement d'un fluide liquide habituellement l'eau salée ou non et, hormis la présence de l'extrémité du conduit 18, est configurée comme dans l'Exemple 1 tandis que la chambre 3 contient un fluide gazeux tel que l'air ou l'hélium, de préférence l'air.

A la lecture de ce qui précède, l'on se rend compte que, lors d'un mouvement descendant à partir de sa position de repos supérieure et en direction de la chambre 3, le piston 20 exerce une pression continue et uniforme sur le volume d'air dans cette chambre 3 tandis que le clapet 16 anti-retour demeure en position d'obturation. Cette pression est déterminée notamment en fonction du réglage de l'ouverture du clapet 19 et de la distance séparant les deux extrémités du conduit 18.

En conséquence, une surpression se crée dans la chambre 3 qui force l'air dans le conduit 18 et provoque l'ouverture du clapet 19 lorsque la pression exercée par l'air sur ce clapet est supérieure à la pression de l'eau supportée par ce même clapet. Sous l'effet de la poussée ascensionnelle provoquée à la fois par l'eau et par la pression du piston exercée sur l'air, celui-ci s'échappe du conduit 18 et vient se loger dans l'angle formé par la courroie 9 et la pale 10 communiquant au moins partiellement à cette pale la poussée reçue. En conséquence, la pale entame un mouvement vertical entraînant les corps cylindriques 6 et 7 qui se mettent en rotation et communiquent ce mouvement de rotation à l'extrémité de l'axe 8 située à l'extérieur du boîtier 1. La vitesse de rotation de cet axe 8 dépendra notamment de la pression de l'air s'échappant du conduit 18 et du nombre de pales 10 fixées à la courroie 9. Lorsque le piston 20 occupe sa position de repos inférieure, le volume de la chambre 3 est nul ou quasi nul alors que les clapets 16 et 19 se trouvent en position fermée.

L'air accumulé entretemps au-dessus du niveau d'eau exerce alors une pression à la fois sur cette eau, sur la paroi transversale 15 et sur le clapet 16 provoquant son ouverture. Toujours sous l'effet de la pression de l'air, le piston 20 quitte sa position de fin de course inférieure, entame un mouvement inverse, ascendant, à mesure que l'air envahit la chambre 3 et provoque, dans le conduit 18, un appel d'air qui a pour conséquence de maintenir le clapet 19 en position d'obturation.

Lorsque le piston 20 occupe sa position de repos supérieure, le volume de la chambre 3 est maximal et les clapets 16 et 19 sont fermés. Une nouvelle sollicitation du piston 20, sous l'effet d'un apport extérieur de force en sens inverse permet d'entamer un nouveau cycle.

Avantageusement, le volume maximal de la chambre 3 sera déterminé de manière que l'air occupant ce volume maximal et le conduit 18 développe une pression résiduelle sur le piston 20 sensiblement égale à la pression exercée par l'eau sur le clapet 19, de sorte qu'à chaque phase descendante du piston, l'application uniquement d'une force extérieure minimale mais suffisante soit nécessaire pour l'ouverture du clapet 19.

D'autre part, l'utilisation, au niveau du clapet 21, de pressions d'air nettement supérieures à la pression de l'eau présente un intérêt incontestable pour obtenir un rendement maximum du dispositif ci-dessus.

En fait, plus la pression de l'air provenant de la chambre 2 et du conduit 18 est importante à cet endroit, plus la vitesse de rotation de l'axe 8 sera élevée. En outre, plus la pression résiduelle de l'air sur le piston 20 dans la chambre 3 à son volume maximal sera importante et plus la demande de force extérieure supplémentaire sur le piston sera faible en cours de travail du dispositif.

### EXEMPLE 3

On a représenté à la figure 6, une variante du mode de réalisation à l'Exemple 1 dans sa phase de descente du piston, cette phase étant représentée à la figure 3.

Dans cette variante, le diaphragme 4 constitue une portion de la paroi transversale rigide 21, le clapet anti-retour 5 étant disposé au niveau de cette paroi rigide. On y remarque également des pales 10 articulées en 22 à la courroie 9.

De manière à maintenir une ouverture angulaire suffisante de ces pales 10 pour la réception de l'air ascendant, une butée 23 est prévue faisant saillie de la courroie 9 et disposée dans l'angle aigu formé par cette courroie et la pale 10. La longueur de cette butée peut être réglée en fonction de l'ouverture angulaire souhaitée.

### EXEMPLE 4

On a représenté à la figure 7 une variante du mode de réalisation à l'Exemple 2. Dans cette variante le conduit 18 est situé à l'intérieur du boîtier 1, l'une des extrémités étant prévue dans la paroi transversale 15 et affleurant la surface de cette paroi à l'intérieur de la chambre 3, l'autre extrémité étant localisée à un niveau inférieur à la limite inférieure du corps cylindrique 6.

On remarque également la présence d'une pluralité de godets 24 disposés, fixes, à la courroie 9.

Le dispositif selon l'invention présente des avantages incontestables. Outre sa mise en oeuvre possible à partir d'énergie non polluante, ce dispositif est d'une simplicité remarquable faisant appel à peu d'éléments constitutifs et à des fluides de coût dérisoire tels que l'air et l'eau.

Au surplus, selon le mode de réalisation adopté, ce dispositif peut trouver usage dans un milieu gazeux, lorsqu'un apport de gaz extérieur est possible et nécessaire, ou dans un milieu liquide, par exemple un milieu aquatique.

Dans un tel mode de réalisation, l'utilisation d'un fluide gazeux plus onéreux que l'air, par exemple l'hélium, pourra être envisagé puisque ce gaz sera constamment recyclé en circuit fermé.

## Revendications

1. Dispositif pour communiquer un mouvement de rotation sur lui-même, autour d'un axe de symétrie et dans un fluide liquide, à au moins un corps circulaire ou à chaque corps circulaire d'un ensemble comprenant au moins deux corps circulaires solidarisés, **caractérisé en ce qu'**il comprend un boîtier (1) scindé intérieurement et transversalement en une chambre de détente apte à recevoir le fluide liquide et en une chambre de pression apte à recevoir un fluide gazeux et **en ce que** la chambre de détente comprend ledit corps circulaire ou ledit ensemble de corps circulaires, muni d'au moins un moyen saillant apte à recevoir une poussée ascensionnelle du fluide gazeux dans le fluide liquide.

2. Dispositif selon la revendication 1 **caractérisé en ce que** le boîtier est scindé intérieurement par une paroi transversale constituée d'un diaphragme (4) élastiquement déformable ou d'une paroi rigide (21) dont une portion est remplacée par un diaphragme (4) élastiquement déformable.

3. Dispositif selon la revendication 1 ou 2 pour communiquer un mouvement de rotation sur lui-même autour d'un axe de symétrie et dans un fluide liquide à chaque corps cylindrique d'un ensemble comprenant deux corps cylindriques (6/7) séparés et solidarisés, **caractérisé en ce qu'**il comprend un boîtier scindé intérieurement par une paroi transversale constituée d'un diaphragme élastiquement déformable ou d'une paroi rigide dont une portion est remplacée par un diaphragme élastiquement déformable, formant ainsi une chambre de détente (2) apte à recevoir le fluide liquide et une chambre de pression (3) apte à recevoir un fluide gazeux et **en ce que** la chambre de détente comprend ledit ensemble de corps cylindriques solidarisés par un moyen de liaison (9), coopérant avec eux, muni d'au moins un moyen saillant (10) apte à recevoir une poussée ascensionnelle du fluide gazeux dans le fluide liquide.

4. Dispositif selon une des revendications 1 à 3, **caractérisé en ce que** la chambre de pression est munie d'un moyen de pression (14) sur le diaphragme.

5. Dispositif selon une des revendications 1 à 4, **caractérisé en ce que** le diaphragme et la chambre de pression sont munis de moyens (5/13) d'ouverture et de fermeture anti-retour de fluide.

6. Dispositif selon la revendication 1, **caractérisé en ce que** le boîtier est scindé intérieurement par une paroi (15) transversale rigide.

7. Dispositif selon la revendication 1 ou 6, pour communiquer un mouvement de rotation sur lui-même autour d'un axe de symétrie et dans un fluide liquide à chaque corps cylindrique d'un ensemble comprenant deux corps cylindriques (6/7) séparés et solidarisés, **caractérisé en ce qu'**il comprend un boîtier scindé intérieurement par une paroi transversale rigide en une chambre de détente (2) apte à recevoir le fluide liquide et en une chambre de pression (3) apte à recevoir un fluide gazeux et **en ce que** la chambre de détente comprend ledit ensemble de corps cylindriques solidarisés par un moyen de liaison (9), coopérant avec eux, muni d'au moins un moyen saillant (10) apte à recevoir une poussée ascensionnelle du fluide gazeux dans le fluide liquide.

8. Dispositif selon une des revendications 1, 6 ou 7, **caractérisé en ce que** la chambre de pression est munie d'un moyen de pression (20) sur la totalité de la paroi transversale rigide.

9. Dispositif selon une des revendications 1, 6, 7 ou 8, **caractérisé en ce que** la chambre de pression et la chambre de détente communiquent entre elles par un conduit (18).

10. Dispositif selon la revendication 9, **caractérisé en ce que** le conduit présente une extrémité, ouverte dans la chambre de pression et située dans la paroi latérale de celle-ci ou dans la paroi transversale rigide, l'autre extrémité étant ouverte dans la chambre de détente et située dans la base de celle-ci ou à l'intérieur de cette chambre de détente à un niveau inférieur à celui du corps circulaire le plus proche de la base de celle-ci.

11. Dispositif selon une des revendications 1 à 10, **caractérisé en ce que** le moyen saillant est un système capable d'emprisonner le fluide gazeux lors d'un mouvement ascendant de ce système dans le fluide liquide puis de libérer ce fluide gazeux lors d'un mouvement descendant.

12. Dispositif selon une des revendications 2 à 11, **caractérisé en ce que** l'ensemble de corps cylindriques est solidarisé par une courroie, une sangle, une chaînette supportant, éventuellement par l'intermédiaire d'une articulation, une pluralité de godets, poches, ou encore pales ou ailettes avec bord transversal replié ou non.
